# EUROPÄISCHE PATENTSCHRIFT

(11) **EP 2 778 426 B1**
(45) Veröffentlichungstag und Bekanntmachung des Hinweises auf die Patenterteilung: **18.11.2020**
(21) Anmeldenummer: 14000514.1
(22) Anmeldetag: 13.02.2014
(51) Int. Cl.: H02P 29/60, F04B 17/03, F04D 13/06, F04D 29/58, H02M 7/00

(54) **Elektromotor mit leistungselektronischem Umrichtersystem und daraus gespeister aktiver Kühleinrichtung**
Electric motor with power electronic converter system and active cooling device that is powered by the same
Moteur électrique doté d'un système de convertisseur électronique de puissance et dispositif de refroidissement actif alimenté à partir de celui-ci

(30) Priorität: 14.03.2013 DE 102013004337
(43) Veröffentlichungstag der Anmeldung: 17.09.2014
(73) Patentinhaber: WILO SE, 44263 Dortmund (DE)
(72) Erfinder: Blöcker, Gerrit, 44263 Dortmund (DE); Sanders, Tilmann Philip, Prof. Dr.-Ing., 44263 Dortmund (DE)
(74) Vertreter: Cohausz Hannig Borkowski Wißgott

(56) Entgegenhaltungen:
- EP-A2- 0 392 963
- DE-A1- 19 837 796
- DE-A1-102012 010 092
- JP-A- S60 131 094
- US-A1- 2003 178 890
- US-A1- 2004 119 439
- US-A1- 2012 059 537

## Beschreibung

Die Erfindung betrifft einen Elektromotor zum Antreiben einer Pumpeneinheit, mit einem leistungselektronischen Umrichtersystem zur Spannungsversorgung des Elektromotors und mit einer aktiven Kühleinrichtung zur Kühlung des Elektromotors und/ oder des Umrichtersystems, wobei das Umrichtersystem einen aus mindestens einem Kondensator gebildeten Zwischenkreis, eine Regelung und wenigstens eine auf einen Kern gewickelte erste Wicklung aufweist, über die Leistung in den Zwischenkreis übertragbar ist und die mit der Regelung verbunden ist, wobei auf den Kern eine zusätzliche Wicklung zur Erzeugung einer darin induzierten Hilfsspannung aufgebracht ist. Ferner betrifft die Erfindung ein Pumpenaggregat mit einer Pumpeneinheit und einem Elektromotor der genannten Art.

Moderne Elektromotoren mit Synchron- oder Asynchronmotoren oder geschalteten Reluktanzmaschinen, die an eine ein- oder dreiphasige Wechselspannung oder an eine Gleichspannung anzuschließen sind, weisen in der Regel eine Steuerungselektronik auf, die je nach angeschlossenem Motor zur Erzeugung einer ein-, drei- oder mehrphasigen Wechselspannung variabler Frequenz zur Beaufschlagung der einzelnen Wicklungen des Elektromotors einen Spannungsumrichter sowie eine entsprechende Ansteuerung dieses Spannungsumrichters mit Steuersignalen umfasst. Der Spannungsumrichter besteht beispielsweise aus einem Gleichrichter, der die ein-, drei- oder mehrphasige Wechselspannung in eine Gleichspannung transformiert, mindestens einem den Zwischenkreis bildenden Kondensator, der die gleichgerichtete Spannung glättet, und einem gesteuerten Wechselrichter, der häufig mittels Steuersignalen in der Art einer Pulsweitenmodulation die Kondensatorspannung zyklisch an eine der Phasen des Elektromotors schaltet. Ein solches Umrichtersystem eines Elektromotors, der eine Pumpe antreibt, ist beispielsweise aus der deutschen Offenlegungsschrift DE 198 37 796 A1 bekannt. Die deutsche Offenlegungsschrift DE 10 2012 010 092 A1 beschreibt ein ebensolches System für einen Verdichtermotor.

Es sind natürlich auch andere Spannungsumrichter bekannt. Beispielsweise kann auf den Wechselrichter verzichtet werden, wenn ein Gleichstrommotor direkt an den Zwischenkreis angeschlossen wird. Des Weiteren kann anstelle des Gleichrichters auch ein Gleichspannungswandler verwendet werden, um eine Gleichspannung am Eingang des Spannungsumrichters in die benötigte Zwischenkreisspannung zu transformieren. Schließlich können auch Transformatoren im Spannungsumrichter verwendet werden.

Um aus dem Netz eine möglichst sinusförmige Stromentnahme zu erhalten, werden in Umrichtersystemen Leistungsfaktorregelungen, auch Leistungsfaktorkorrektur (PFC, Power Factor Correction) genannt, eingesetzt. Eine solche wird beispielsweise zwischen dem Gleichrichter und dem Zwischenkreis angeordnet und kann in Abhängigkeit der Beschaltung wie ein Hochsetzsteller, ein Tiefsetzsteller oder ein Gleichspannungswandler, z.B. ein SEPIC-Wandler (Single Ended Primary Inductance Converter) arbeiten. Ein Hochsetzsteller lädt den Zwischenkreis auf eine Spannung auf, die über dem Scheitelwert der ausgangsseitigen Spannung am Gleichrichter liegt. Ein Tiefsetzsteller lädt den Zwischenkreis auf eine Spannung auf, die unter dem Scheitelwert der ausgangsseitigen Spannung am Gleichrichter liegt. Schließlich kann ein Gleichspannungswandler den Zwischenkreis auf eine beliebige Spannung aufladen.

Im Falle eines Hochsetzstellers kann beispielsweise eine Induktivität (Drosselspule), über die der Eingangsstrom geleitet ist, mittels eines gesteuerten elektronischen Schalters zu Masse verbunden werden, so dass sie sich auflädt. Öffnet der Schalter, entlädt sich die Spule in den Zwischenkreiskondensator und lädt diesen auf.

Die Elektronik der Leistungsfaktorregelung benötigt eine Versorgungsspannung, die im Vergleich zur Versorgungsspannung des Elektromotors eine Kleinspannung ist. Häufig wird hierzu ein eigenständiges Netzteil mit Transformator eingesetzt, der primärseitig ebenfalls mit der einphasigen Wechselspannung beaufschlagt ist und sekundärseitig eine gewünschte Wechsel-Kleinspannung ausgibt. Der Transformator besitzt jedoch ein vergleichsweise hohes Gewicht sowie Verluste, die den Wirkungsgrad der Hilfsspannungserzeugung auf 70% bis 50% reduzieren.

Eine Alternative bildet ein Schaltnetzteil mit Gleichspannungswandler (DC-DC Wandler), der die Zwischenkreisspannung zur Speisung der Elektronik verwendet. Der Wirkungsgrad dieser Anordnung liegt deutlich höher, bei ca. 70% bis 85%. Allerdings verwendet ein DC-DC Wandler ein hochfrequentes Schalten der Spannung, was zu elektromagnetischer Strahlung und damit schlechter EMV führt. Des Weiteren sind hohe Anforderungen an die Isolationsfestigkeit zu stellen, da der DC-DC Wandler an der Zwischenkreisspannung von beispielsweise 380V DC anliegt.

Nach einer anderen Alternative ist aus der Europäischen Patentschrift EP 0 859 453 B1 eine Leistungsfaktorregelung (PFC, Power Factor Control) im Zwischenkreis bekannt, deren Versorgungsspannung mittels einer Spule erzeugt wird, die induktiv mit einer Filterinduktivität gekoppelt ist, die der vorgenannten Drosselspule entspricht, d.h. die den Strom in den Zwischenkreiskondensator führt. Auch hier ist ein Schalter vorgesehen, der derart geschaltet ist, dass er die Filterinduktivität im geschlossenen Zustand zu Masse verbindet. Dieser Schalter wird hochfrequent geschaltet, so dass entsprechend hochfrequente Spannungsschwankungen an der Filterinduktivität entstehen, die eine Spannung in die zusätzliche Spule induzieren. Filterinduktivität und Spule bilden dabei eine Art Transformator. Die so erzeugte Hilfsspannung wird dann mittels einer Diode und einem Kondensator zu der benötigten DC-Versorgungsspannung verarbeitet, wobei der Kondensator über die Diode geladen wird. Einen solchen Aufbau beschreibt auch die europäische Patentanmeldung EP 0392 963 A2 und die US Anmeldung 2003/0178890.

Eine ähnliche Erzeugung einer Hilfsspannung für eine Elektronik in einem Leuchtstofflampenvorschaltgerät, die elektronische Halbleiter aufsteuert, ist in der deutschen Gebrauchsmusterschrift DE 296 05 087 U1 offenbart.

Elektromotoren besitzen je nach Leistung passive oder aktive Kühleinrichtungen zum Kühlen des Stators und/ oder zum Kühlen der Steuerungselektronik, insbesondere der Leistungshalbleiter. In der Regel werden hierzu passive Kühleinrichtungen wie beispielsweise Kühlrippen verwendet. Ein effizienter Wärmeübergang ist dabei vom Abwärme erzeugenden Bauteil zu den entsprechenden Rippen erforderlich. Hierfür kommen Wärmesenken zum Einsatz, auf die die elektronischen Bauteile mittels Wärmeleitpaste geklebt sind.

Des Weiteren sind Kühleinrichtungen bei Elektromotoren bekannt, die mit Hilfe eines auf der Welle laufenden Lüfterrades das Motorgehäuse von der Rückseite aus kühlen und/ oder einen Luftstrom in die elektrischen Wicklungen richten. Darüber hinaus sind aktive Kühleinrichtungen bekannt.

Bei aktiven Kühleinrichtungen, die alternativ oder zusätzlich Verwendung finden, werden in der Regel Lüfter eingesetzt, die die zu kühlenden Bauteile oder Kühlrippen mit Luft umströmen. Auch Flüssigkeitskühlungen sind bekannt. Eine solche Kühlung erfordert einen Motor und eine diesen versorgende Spannung, wie es beispielsweise die US Anmeldung US 2004/0119439 A1 offenbart. Der Motor wird hier aus einer Leistungseinheit versorgt, die ihrerseits ihre Spannugn aus dem Zwischenkreis entnimmt. Beim Einsatz von zusätzlichen aktiven Kühleinrichtungen wie Elektromotoren mit Lüfterrädern bzw. Kühlflüssigkeitspumpen sind somit zusätzliche Bauteile, wie eine Steuerungselektronik, um die Drehzahl und damit die Kühlleistung einzustellen, und Sensoren notwendig. Hierfür wird in der Regel ein Temperatursensor verwendet, der einen Temperaturmesswert des zu kühlenden Bauteils liefert, wobei die Lüftersteuerung je nach Messwert eine höhere oder geringere Lüfterdrehzahl vorgibt. Die jeweils notwendigen Bauteile verkomplizieren und verteuern den Aufbau des Elektromotors, insbesondere der Elektronik. Ferner besteht im Falle eines Defekts des Sensors oder der Ansteuerung Überhitzungsgefahr für den Motor.

Aufgabe der Erfindung ist es, einen Elektromotor mit einer sich selbst regelnden und ausfallsicheren Spannungsversorgung für eine aktive Kühleinrichtung des Elektromotors mit minimalen Mitteln bereitzustellen.

Diese Aufgabe wird durch einen Elektromotor mit den Merkmalen des Anspruchs 1 gelöst. Vorteilhafte Weiterbildungen sind in den Unteransprüchen angegeben.

Erfindungsgemäß wird ein Elektromotor zum Antreiben einer Pumpeneinheit vorgeschlagen, mit einem leistungselektronischen Umrichtersystem zur Spannungsversorgung des Elektromotors und mit einer aktiven Kühleinrichtung zur Kühlung des Elektromotors und/ oder des Umrichtersystems, wobei das Umrichtersystem einen aus mindestens einem Kondensator gebildeten Zwischenkreis, eine Regelung und wenigstens eine auf einen Kern gewickelte erste Wicklung aufweist, über die Leistung in den Zwischenkreis übertragbar ist und die mit der Regelung verbunden ist, wobei auf den Kern eine zusätzliche Wicklung zur Erzeugung einer darin induzierten Hilfsspannung aufgebracht ist und die zusätzliche Wicklung mit der aktiven Kühleinrichtung zur Speisung der Kühleinrichtung mittels der Hilfsspannung verbunden ist.

Kerngedanke der vorliegenden Erfindung ist es somit, auf eine Leistung in den Zwischenkreis speisende Wicklung, deren Strom von der Regelung bestimmt ist, eine zusätzliche Wicklung aufzubringen, in die bei einem sich ändernden Stromfluss durch die erste Wicklung eine Wechselspannung induziert wird. Diese Wechselspannung wird dann zur Speisung einer Kühleinrichtung verwendet.

Die Erfindung hat den Vorteil, dass auf Temperatursensoren und eine eigene Ansteuerungselektronik für die Kühleinheit gänzlich verzichtet werden kann. Denn zieht der Elektromotor viel Energie aus dem Zwischenkreis, so macht sich dies in höheren Wechselspannungsschwankungen an der ersten Wicklung bemerkbar, so dass eine höhere Spannung in der zusätzlichen Wicklung induziert wird. Dies führt wiederum dazu, dass die Kühleinrichtung mehr Energie erhält und stärker kühlen kann. Somit wird durch die erfindungsgemäße Lösung eine sich selbst regelnde und ausfallsichere Spannungsversorgung für eine aktive Kühleinrichtung des Elektromotors mit minimalen Mitteln bereitgestellt.

Die Generierung einer Hilfsspannung aus der zusätzlichen Wicklung führt zu geringeren Herstellungskosten der Steuerungselektronik des Elektromotors im Vergleich zu alternativen Lösungen, da auf Temperatursensoren und Ansteuerungselektronik verzichtet werden kann. Dies hat weitere Vorteile.

So werden auch keine zusätzlichen schaltenden Komponenten benötigt, die üblicherweise in Ansteuerungselektroniken enthalten sind. Somit wird weniger Störstrahlung erzeugt und die elektromagnetische Verträglichkeit (EMV) verbessert. Die Steuerungselektronik des Elektromotors, die das Umrichtersystem umfasst, erhält ferner ein geringeres Gewicht und es werden keine zusätzlichen elektrischen Verluste erzeugt. Dadurch wird der Wirkungsgrad des gesamten Elektromotors, insbesondere im Teillastbereich erhöht.

Des Weiteren wird ein automatisches Einschalten der Kühleinrichtung erreicht, nämlich gleichzeitig mit dem Einschalten der Regelung, insbesondere bei höheren Leistungen. Durch das Einschalten werden der ersten Wicklung stärkere Spannungsschwankungen auferlegt, so dass auch die Spannung an der zusätzlichen Wicklung steigt. Es erfolgt damit ein automatisches Einschalten der Kühleinrichtung beim Übergang des Elektromotors zu höheren Leistungen. Dadurch wird auch eine automatische Zwangskühlung des Elektromotors, der Steuerungselektronik und/ oder des Umrichtersystems erreicht.

Das Umrichtersystem kann einen beliebigen Aufbau einer bekannten Art aufweisen. So kann das Umrichtersystem beispielsweise einen ein- oder mehrphasigen Gleichrichter aufweisen, der den Zwischenkreis speist. Auf diese Weise kann eine Wechselspannungsquelle für den Betrieb des Elektromotors verwendet werden. Es besteht jedoch auch die Möglichkeit, dass der Zwischenkreis direkt aus einer Gleichspannung gespeist wird, so dass kein Gleichrichter benötigt wird. Der Zwischenkreis wird dann aus der Gleichspannungsquelle gespeist. Wird eine Wechselspannungsquelle mit nachgeschaltetem Gleichrichter verwendet, ist es von Vorteil, eine Leistungsfaktorregelung in den Regler zu integrieren, um die Rückwirkungen zur Wechselspannungsquelle hin und die Blindleistungsaufnahme minimal zu halten.

Ferner kann auch der Elektromotor eine beliebige Bauart besitzen und ein Gleichstrom- oder Wechselstrommotor sein. Zur Speisung eines Wechselstrommotors kann das Umrichtersystem einen Wechselrichter aufweisen, der die Gleichspannung des Zwischenkreises in eine ein- oder mehrphasige Wechselspannung umwandelt.

In einer bevorzugten Ausführungsvariante kann die erste Wicklung eine von dem Strom (i_{zk}) in den Zwischenkreis durchfließbare Drosselspule sein. Dies bedeutet, dass die gesamte Leistung über die erste Wicklung elektrisch in den Zwischenkreis gespeist wird.

Gemäß einer alternativen Ausführungsvariante ist die erste Wicklung die Primärseite eines Transformators und eine seine Sekundärseite bildende zweite Wicklung ist mit dem Zwischenkreis verbunden. Dies bedeutet, dass die gesamte Leistung über die erste Wicklung elektro-magnetisch in den Zwischenkreis gespeist wird.

In beiden beispielhaften Ausführungsvarianten kann die Regelung einen gesteuerten, insbesondere elektronischen Schalter und einen diesen steuernden Regler aufweisen, wobei ein Anschluss der ersten Wicklung über den Schalter mit einem Bezugspotential (GND), insbesondere einem gemeinsamen Bezugspotential der elektrischen Bauteile des Umrichtersystems verbindbar ist. Dieses Bezugspotential kann beispielsweise Masse sein Wird der Zwischenkreis aus einer Wechselspannungsquelle mit Gleichrichter gespeist, ist in dem Regler vorzugsweise eine Leistungsfaktorregelung integriert.

Die Kühleinrichtung kann beispielsweise durch einen elektromotorischen Lüfter zur Erzeugung eines den Elektromotor, dessen Steuerungselektronik und/ oder des Umrichtersystems kühlenden Luftstroms gebildet sein.

Alternativ kann die Kühleinrichtung durch eine elektromotorische Kühlmittelpumpe zum Antrieb eines Kühlmittelkreislaufs zur Kühlung des Elektromotors, dessen Steuerungselektronik und/ oder des Umrichtersystems gebildet ist.

Gemäß einer weiteren Alternative kann die Kühleinrichtung auch durch ein Peltierelement gebildet sein. Dieses ist vergleichsweise flachbauend und kann insbesondere zur Kühlung der leistungselektronischen Bauteile des Umrichtersystems und/ oder der Steuerungselektronik des Elektromotors verwendet werden. Zu diesem Zwecke kann es vor allem zum Wärmetransport von den leistungselektronischen Bauelementen zu einer Wärmesenken und/ oder zu einer passiven Kühleinrichtung, wie das Motorgehäuse und/ oder Kühlrippen dienen. Es steht dann mit den leistungselektronischen Bauelementen und der Wärmesenke und/ oder passiven Kühleinrichtung in wärmeleitender, insbesondere berührender Weise in Verbindung.

Vorzugsweise ist die Anzahl der Windungen der zusätzlichen Wicklung geringer als die Anzahl der Windungen der ersten Wicklung. Hierdurch wird erreicht, dass die Amplitude der in die zusätzliche Wicklung induzierten Spannung geringer ist, als die an der ersten Wicklung anliegende Spannungsamplitude. Denn diese entspricht in ihrer Form einer Rechteckspannung und dem maximalen Betrag nach der Zwischenkreisspannung. Die mit der zusätzlichen Wicklung erzeugte Hilfsspannung kann demgemäß wie bei einem Transformator über das Windungszahlenverhältnis an die für die Kühleinrichtung benötigte Spannung angepasst werden. Der Kern kann eine beliebige Form aufweisen, beispielsweise stabförmig sein. Vorzugsweise ist er torusförmig, so dass nur ein geringer Platzbedarf für die erste und die zusätzliche Wicklung benötigt wird.

Auch bei der Anordnung der Wicklungen sind verschiedene Varianten möglich. Beispielsweise können die erste und die zusätzlichen Wicklung nebeneinander auf dem Kern gewickelt sein. Bevorzugt sind die erste Wicklung und die zusätzliche Wicklung jedoch übereinander gewickelt. Damit kann der Kern im Hinblick auf die Länge der Magnetfeldlinien besonders klein ausgeführt werden.

Von Vorteil ist es, wenn zwischen der weiteren Wicklung und der Kühleinrichtung ein Spannungsregler zur Regelung der an die Kühleinrichtung angelegten Höhe der Hilfsspannung Uₐᵤₓ geschaltet ist. Hierdurch kann die Kühlleistung der Kühleinrichtung gesondert eingestellt werden, jedoch lediglich innerhalb derjenigen Grenzen, die durch den Betriebspunkt des Elektromotors vorgegeben sind. Der Spannungsregler kann vorzugsweise auch dazu eingerichtet sein, die Kühleinrichtung bei Bedarf abzuschalten. Dies ist insbesondere dann sinnvoll, wenn der Elektromotor bei einer niedrigen Umgebungstemperatur verwendet wird, da in diesem Fall selbst bei hohen Leistungen des Elektromotors gegebenenfalls keine Kühlung erforderlich ist. Durch ein Bedarfsabhängiges Ab- bzw. Einschalten kann die Lebensdauer der Kühleinrichtung erhöht werden.

Vorzugsweise ist die erste Wicklung, insbesondere die Drosselspule, mitsamt der Regelung Teil eines Hochsetzstellers, der den Kondensator des Zwischenkreises auf einen Spannungswert aufladen kann, der höher als der Scheitelwert der Eingangsspannung des Zwischenkreises ist. Alternativ kann die erste Wicklung mitsamt der Regelung Teil eines Tiefsetzstellers sein, der den Kondensator des Zwischenkreises auf einen Spannungswert aufladen kann, der niedriger als der Scheitelwert der Eingangsspannung des Umrichtersystems ist. Gemäß einer weiteren Alternative kann die erste Wicklung mitsamt der Regelung Teil eines Gleichspannungswandlers sein, der den Kondensator des Zwischenkreises auf einen Spannungswert aufladen kann, die höher oder niedriger als der Scheitelwert der Eingangsspannung des Umrichtersystems ist. Der Gleichspannungswandler kann beispielsweise ein SEPIC-Wandler (Single Ended Primary Inductance Converter) sein.

Es wird des Weiteren ein Pumpenaggregat vorgeschlagen, dass eine Pumpeneinheit und einem Elektromotor der vorbeschriebenen Art umfasst. Insbesondere kann das Pumpenaggregat eine Heizungspumpe sein. Das Pumpenaggregat ist vorzugsweise eine umrichtergesteuerte Pumpe mit aktiver PFC-Schaltung (Power Factor Control).

Durch die Speisung der Kühleinrichtung aus der zusätzlichen Wicklung auf der ersten Wicklung, insbesondere auf der Drosselspule der PFC-Schaltung kann auf eine komplizierte Steuerung bzw. Regelung der Motorkühlung verzichtet werden. Insbesondere können hierdurch der Aufbau vereinfacht, die Herstellungskosten reduziert, das bauliche Volumen für die benötigten elektrischen Bauelemente reduziert, und die Ausfallsicherheit erhöht werden, da auf eine Steuereinheit/ Regelungseinheit mit Sensorik und Soll-/ Istwertvergleich verzichtet werden kann.

Weitere Merkmale und Vorteile des erfindungsgemäßen Elektromotors werden nachfolgend anhand eines Ausführungsbeispiels und der beigefügten Figuren erläutert. Es zeigen:
- Figur 1:: Vereinfachtes Blockschaltbild eines Elektromotors mit einem Umrichtersystem mit Leistungsfaktorregelung nach dem Stand der Technik
- Figur 2:: Vereinfachtes Blockschaltbild eines Elektromotors mit einem als Hochsetzsteller ausgeführten Umrichtersystem mit Leistungsfaktorregelung und daraus gespeister, selbstgeregelter Kühleinrichtung mit Hochsetzsteller
- Figur 3:: Vereinfachtes Blockschaltbild eines Elektromotors mit einem als Gleichspannungswandler ausgeführten Umrichtersystem mit Leistungsfaktorregelung und daraus gespeister, selbstgeregelter Kühleinrichtung mit Hochsetzsteller

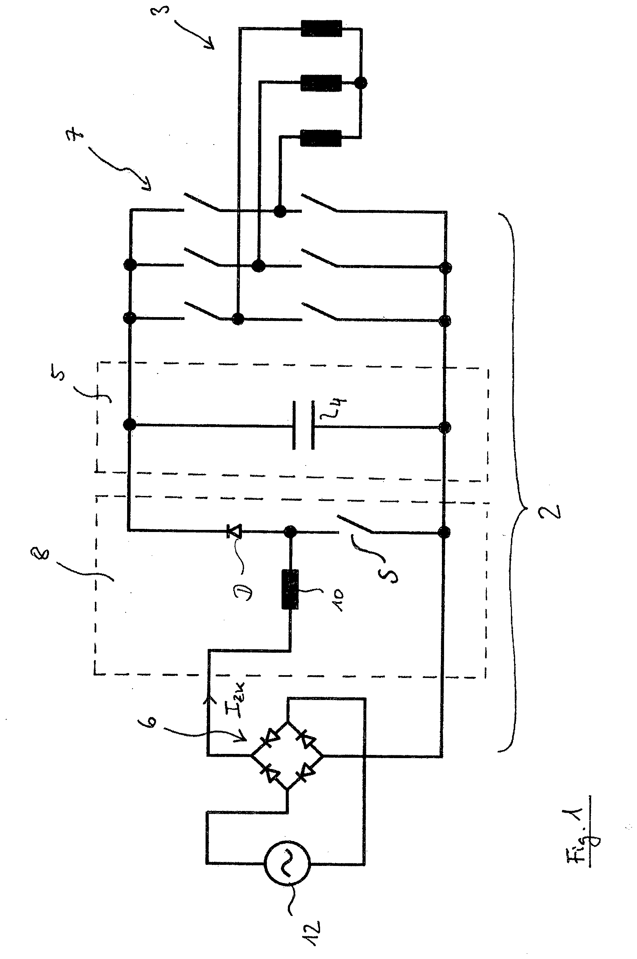

Die Figur 1 zeigt einen dreiphasigen Elektromotor 3, der von einem leistungselektronischen Umrichtersystem 2 gespeist wird. Dieses ist eingangsseitig mit einer einphasigen Wechselspannungsquelle 12 verbunden, beispielsweise ein Netzanschluss.

Mit Hilfe eines Gleichrichters 6 wird aus einer Wechselspannung eine Gleichspannung geformt. Aus dem Gleichrichter 6 fließt ein Strom I_{ZK} durch die Drosselspule 10 einer aktiven Leistungsfaktorregelung (PFC) 8. Die Drosselspule 10 ist auf einen magnetischen Kern 9 aufgebracht. Über eine Diode D fließt der Strom I_{ZK} weiter in einen Kondensator 4, der einen Zwischenkreis 5 bildet. Ein Wechselrichter 7 mit Halbleiterschaltern schaltet die Spannung des Zwischenkreiskondensators 4 zyklisch auf eine der hier beispielhaften drei Phasen des Elektromotors 3. Die Ansteuerung der Halbleiterschalter erfolgt mittels einer Pulsweitenmodulation in bekannter Weise. Die Pulsweitenmodulation ist Teil der Steuerungselektronik des Elektromotors. Aus dem Zwischenkreis 5 fließt der Strom dann gemäß aktuell anliegendem Schaltzustand des Wechselrichters 7 in eine der hier beispielhaften drei Wicklungen des Elektromotors 3.

Die Leistungsfaktorregelung 8 umfasst einen elektronischen Schalter S, der parallel zu dem Zwischenkreiskondensator 4 liegt. Wird diese geschaltet, liegt eine Verbindung der Drosselspule 10 zu Masse vor, so dass die positive Gleichspannung am Ausgang des Gleichrichters 6 an der Drosselspule 10 anliegt und einen steilen Stromanstieg verursacht. Der Kondensator 4 entlädt sich dabei aufgrund der Diode D nicht. Öffnet der Schalter S, so fließt aufgrund der Stetigkeit des Stromes in der Spule 10 der Strom weiter und lädt den Kondensator 4 auf. Der Schalter S wird mit konstanter Frequenz aber variabler Einschaltdauer ein- und ausgeschaltet (Pulsweitenmodulation PWM), so dass eine entsprechend frequente Spannungsschwankung an der Drosselspule 10 entsteht. Die Drosselspule 10 und der Schalter S bilden somit einen Hochsetzsteller, der den Kondensator 4 des Zwischenkreises 2 auf einen Spannungswert auflädt, der höher als der Scheitelwert der Eingangsspannung des Zwischenkreises 2 ist. Durch entsprechende Regelung der PWM kann so ein sinusförmiger Strom aus dem Netz 12 entnommen werden, während die Zwischenkreisspannung annähernd konstant gehalten wird.

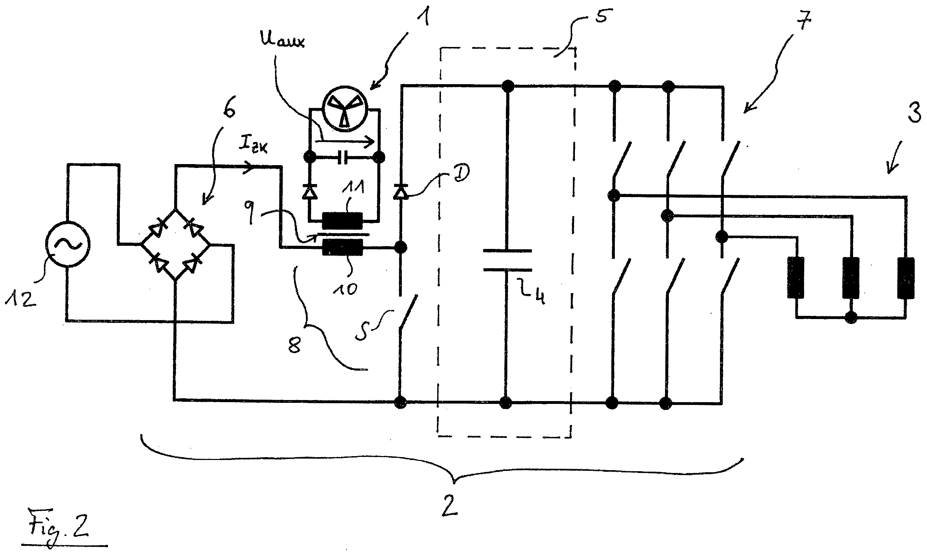

Die Figur 2 zeigt ein vereinfachtes Blockschaltbild einer erfindungsgemäßen Ausführungsvariante eines Elektromotors 3 mit einem als Hochsetzsteller ausgeführten Umrichtersystem 2 mit Leistungsfaktorregelung 8 und daraus gespeister, selbstgeregelter Kühleinrichtung 1. Im Wesentlichen entspricht das Schaltbild in Figur 2 demjenigen aus Figur 1, so dass hier nur die Unterschiede erläutert werden. Im Übrigen sei auf die Erläuterungen zu Figur 1 verwiesen.

In Figur 2 ist eine Hilfswicklung 11 auf den Kern 9 der Drosselspule 10 aufgebracht, so dass zwischen der Drosselspule 10 und der Hilfswicklung 11 ein Transformator gebildet ist. Parallel zu dieser Hilfsspule 11 liegt ein Glättungskondensator, der über eine Diode mit der Hilfswicklung 11 verbunden ist, damit er sich aufladen kann. Mit der Diode wird eine einfache Gleichrichtung erreicht. Anstelle der Diode könnte auch ein vollwertiger Gleichrichter eingesetzt werden oder ein Spannungsregler nachgeschaltet sein.

Die Hilfswicklung 11 kann eine Hilfsspannung Uₐᵤₓ bereitstellen, soweit die an der Drosselspule 10 anliegende Spannung einen Wechselanteil enthält. Der Kern 9 der Drosselspule 10 wird bei geschlossenem Schalter S aufmagnetisiert und bei geöffnetem Schalter S entmagnetisiert. Diese mit der PWM-Frequenz variierende Magnetisierung wird genutzt werden, um in der Hilfswicklung 11 auf dem Kern 9 der Drosselspule 10 (PFC-Drossel) eine Spannung zu induzieren, die dann an dem Kondensator geglättet abgreifbar ist. An den Kondensator ist elektrisch parallel eine Kühleinrichtung 1 angeschlossen, die hier ein elektromotorischer Lüfter ist, der die Elektronik, d.h. das Umrichtersystem 2 samt nicht dargestellter elektronischer Steuerung zur Erzeugung der Steuersignale für den Wechselrichter des Elektromotors 3 kühlt. Die Hilfsspannung Uₐᵤₓ ist damit die Versorgungsspannung für die aktive Kühleinrichtung 1.

Die an der Drosselspule 10 anliegende Spannung U_{L} ist rechteckförmig und entspricht entweder dem Betrag der Netzspannung |U_{AC}|, sofern der Schalter S geschlossen ist, oder der Differenz aus |U_{AC}| und der Zwischenkreisspannung U_{DC}, sofern der Schalter S geöffnet ist. Die Amplitude der Rechteckspannung beträgt daher U_{Lss} = |U_{AC}| - (|U_{AC}| - U_{DC}) = U_{DC} und entspricht folglich betraglich der Zwischenkreisspannung. Mit der zweiten Wicklung 11 wird aus der Drosselspule 10 ein Transformator und die in der Hilfswicklung 11 induzierte Hilfsspannung Uₐᵤₓ ergibt sich zu U_{aux_ss} = N₂/N₁ ^{∗} U_{DC}, wobei N₂/N₁ das Windungszahlenverhältnis zwischen Hilfswicklung 11 und Drosselspule 10 ist. Die Größen U_{Lss} und U _{aux_ss} geben die Spitze-Spitze-Werte der Spannungen U_{L} und Uₐᵤₓ an.

Im diskontinuierlichen Betrieb des Hochsetzstellers gilt diese Betrachtung jedoch nicht, da dann die Diode D bei geöffnetem Schalter S die Drosselspule 10 nicht immer mit der Zwischenkreisspannung U_{DC} verbindet. Daher wird für den Betrieb der Leistungsfaktorregelung 8 eine Mindestlast benötigt. Dieser Umstand wird erfindungsgemäß zur Steuerung des Lüfters 1 ausgenutzt, da der Lüfter 1 nur bei Belastung der Leistungsfaktorregelung 8 benötigt wird.

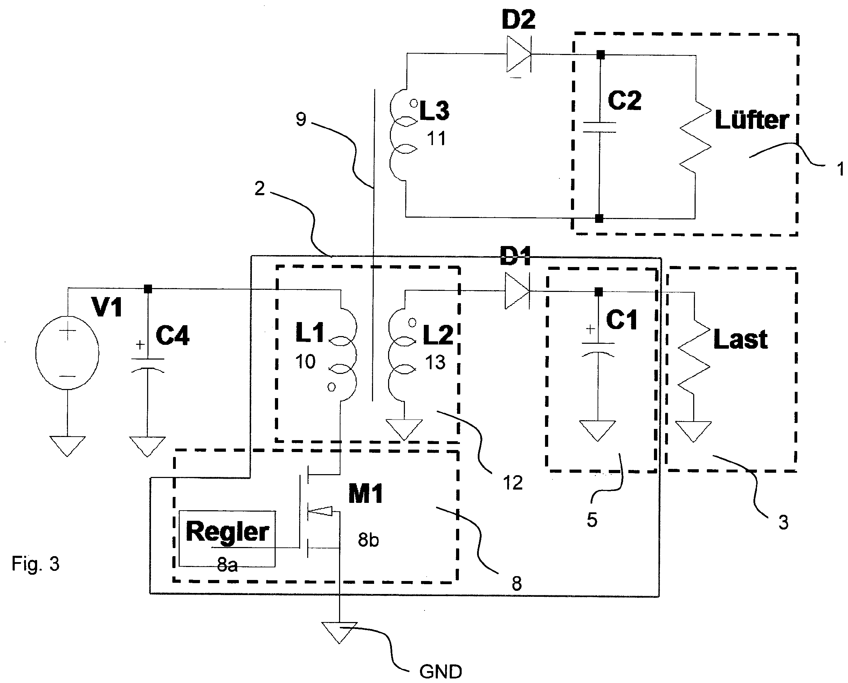

Die Figur 3 zeigt ein vereinfachtes Blockschaltbild einer erfindungsgemäßen Ausführungsvariante eines Elektromotors 3 mit einem als Gleichspannungswandler ausgeführten Umrichtersystem 2 mit Regelung 8 und daraus gespeister, selbstgeregelter Kühleinrichtung 1, hier beispielhaft in Gestalt eines Lüfters. Gespeist wird das Umrichtersystem 2 von einer Gleichspannungsquelle V1, so dass kein Gleichrichter erforderlich ist. Der Gleichspannungswandler ist durch einen Transformator 12 gebildet, dessen Primärseite die erste Wicklung 10 ist und dessen Sekundärseite durch eine zweite Wicklung 13 gebildet ist. Ausgangsseitig des Zwischenkreises 5 ist ein Gleichstrommotor, hier mit Last bezeichnet, angeschlossen, so dass bei dem Umrichtersystem 2 auch kein Wechselrichter erforderlich ist. Alternativ kann die Gleichspannungsquelle V1 eine Wechselspannungsquelle mit Gleichrichter sein.

Die erste Wicklung liegt in Reihe mit einem elektronischen Schalter 8b der Regelung 8, welcher von einem Regler 8a gesteuert ist. Ist die Gleichspannungsquelle V1 durch eine Wechselspannungsquelle mit Gleichrichter ersetzt, ist in dem Regler eine Leistungsfaktorregelung integriert. Der Schalter 8b ist als n-Kanal MOS-FeldeffektTransistor ausgeführt, der die erste Wicklung 10 im leitenden Zustand nach Masse GND verbindet. Auf den Kern 9 des Transformators 12 ist die zusätzliche Wicklung 11 aufgebracht, so dass die zusätzliche Wicklung 11 über den Kern 9 magnetisch mit der ersten Wicklung 10 gekoppelt ist, so dass die in Folge des Schaltens des Schalters 8b in der ersten Wicklung 10 erzeugten Spannungsänderungen unmittelbar in der zusätzlichen Wicklung 11 die Hilfsspannung induzieren, die zur Bestromung des Lüfters 1 dient.

## Patentansprüche

1. Elektromotor (3) zum Antreiben einer Pumpeneinheit, mit einem insbesondere leistungselektronischen Umrichtersystem (2) zur Spannungsversorgung des Elektromotors (3) und mit einer aktiven Kühleinrichtung (1) zur Kühlung des Elektromotors (3) und/ oder des Umrichtersystems (2), wobei das Umrichtersystem (2) einen aus mindestens einem Kondensator (4) gebildeten Zwischenkreis (5), eine Regelung (8) und wenigstens eine auf einen Kern (9) gewickelte erste Wicklung (10) aufweist, über die Leistung in den Zwischenkreis (5) übertragbar ist und die mit der Regelung (8) verbunden ist, wobei auf den Kern (9) eine zusätzliche Wicklung (11) zur Erzeugung einer darin induzierten Hilfsspannung (Uₐᵤₓ) aufgebracht ist, **dadurch gekennzeichnet, dass** die zusätzliche Wicklung (11) mit der aktiven Kühleinrichtung (1) zur Speisung der Kühleinrichtung (1) mittels der Hilfsspannung (Uₐᵤₓ) verbunden ist.

2. Elektromotor (3) nach Anspruch 1, **dadurch gekennzeichnet, dass** die erste Wicklung (10) eine von dem Strom (i_{zk}) in den Zwischenkreis (5) durchfließbare Drosselspule (10) ist.

3. Elektromotor (3) nach Anspruch 1, **dadurch gekennzeichnet, dass** die erste Wicklung (10) die Primärseite eines Transformators (12) ist und eine seine Sekundärseite bildende zweite Wicklung (13) mit dem Zwischenkreis (5) verbunden ist.

4. Elektromotor (3) nach einem der vorherigen Ansprüche, **dadurch gekennzeichnet, dass** die Regelung (8) einen gesteuerten, insbesondere elektronischen Schalter (8a) und einen diesen steuernden Regler (8b) aufweist, wobei ein Anschluss der ersten Wicklung (10) über den Schalter (8a) mit einem Bezugspotential (GND), insbesondere mit Masse, verbindbar ist.

5. Elektromotor (3) nach einem der vorherigen Ansprüche, **dadurch gekennzeichnet, dass** die Kühleinrichtung (1) durch einen elektromotorischen Lüfter zur Erzeugung eines kühlenden Luftstroms gebildet ist.

6. Elektromotor (3) nach einem der vorherigen Ansprüche, **dadurch gekennzeichnet, dass** die Kühleinrichtung (1) durch eine elektromotorische Kühlmittelpumpe zum Antrieb eines Kühlmittelkreislaufs gebildet ist.

7. Elektromotor (3) nach einem der Ansprüche 1 bis 5, **dadurch gekennzeichnet, dass** die Kühleinrichtung durch ein Peltierelement gebildet ist.

8. Elektromotor (3) nach einem der vorhergehenden Ansprüche, **dadurch gekennzeichnet, dass** die Anzahl der Windungen der zusätzlichen Wicklung (11) geringer ist als die Anzahl der Windungen der ersten Wicklung (10).

9. Elektromotor (3) nach einem der vorherigen Ansprüche, **dadurch gekennzeichnet, dass** zwischen der weiteren Wicklung (11) und der Kühleinrichtung (1) ein Spannungsregler zur Regelung der an die Kühleinrichtung (1) angelegten Höhe der Hilfsspannung (Uₐᵤₓ) geschaltet ist.

10. Elektromotor (3) nach Anspruch 9, **dadurch gekennzeichnet, dass** der Spannungsregler dazu eingerichtet ist, die Kühleinrichtung bei Bedarf abzuschalten.

11. Elektromotor (3) nach einem der vorherigen Ansprüche, **dadurch gekennzeichnet, dass** der Kern torusförmig ist.

12. Elektromotor (3) nach einem der vorherigen Ansprüche, **dadurch gekennzeichnet, dass** die erste Wicklung (10) und die zusätzliche Wicklung (11) übereinander gewickelt sind.

13. Elektromotor (3) nach einem der vorherigen Ansprüche, **dadurch gekennzeichnet, dass** die erste Wicklung (10) Teil eines Hochsetzstellers ist, der den Kondensator (4) des Zwischenkreises (2) auf einen Spannungswert aufladen kann, der höher als der Scheitelwert der Eingangsspannung des Umrichtersystems (2) ist.

14. Elektromotor (3) nach einem der Ansprüche 1 bis 11, **dadurch gekennzeichnet, dass** die erste Wicklung (10) Teil eines Tiefsetzstellers ist, der den Kondensator (4) des Zwischenkreises (2) auf einen Spannungswert aufladen kann, der niedriger als der Scheitelwert der Eingangsspannung des Umrichtersystems (2) ist.

15. Elektromotor (3) nach einem der Ansprüche 1 bis 11, **dadurch gekennzeichnet, dass** die erste Wicklung (10) Teil eines Gleichspannungswandlers ist, der den Kondensator (4) des Zwischenkreises (2) auf einen Spannungswert aufladen kann, die höher oder niedriger als der Scheitelwert der Eingangsspannung des Umrichtersystems (2) ist.

16. Elektromotor (3) nach einem der vorherigen Ansprüche, **dadurch gekennzeichnet, dass** die Regelung (8) mehrphasig ist.

17. Elektromotor (3) nach einem der vorherigen Ansprüche, **dadurch gekennzeichnet, dass** die Regelung (8) eine Leistungsfaktorregelung ist.

18. Pumpenaggregat mit einer Pumpeneinheit und einem Elektromotor (3) nach einem der vorherigen Ansprüche.

## Claims

1. Electric motor (3) for driving a pump unit, comprising a converter system (2), notably a power electronic converter system, for supplying power to the electric motor (3) and an active cooling device (1) for cooling the electric motor (3) and/or the converter system (2), in which the converter system (2) has an intermediate circuit (5) formed from at least one capacitor (4), a control (8) and at least one first winding (10) wound on a core (9), via which power is transferable into the intermediate circuit (5) and which is connected to the control (8), in which an additional winding (11) for generating an induced auxiliary voltage (Uₐᵤₓ) is applied on the core (9), **characterised by** the additional winding (11) being connected to the active cooling device (1) for feeding the cooling device (1) by means of the auxiliary voltage (Uₐᵤₓ).

2. Electric motor (3) according to claim 1, **characterised by** the first winding (10) being an inductor (10) through which the current (i_{zk}) can flow into the intermediate circuit (5).

3. Electric motor (3) according to claim 1, **characterised by** the first winding (10) being the primary side of a transformer (12) and a second winding (13) forming its secondary side being connected to the intermediate circuit (5).

4. Electric motor (3) according to one of the preceding claims, **characterised by** the control (8) having a controlled, notably electronic switch (8a) and a controller (8b) that controls the same, in which a connection of the first winding (10) can be connected to a reference potential (GND), notably to ground, via the switch (8a).

5. Electric motor (3) according to one of the preceding claims, **characterised by** the cooling device (1) being formed by an electric motor driven fan for generating a cooling air flow.

6. Electric motor (3) according to one of the preceding claims, **characterised by** the cooling device (1) being formed by an electric motor driven coolant pump for driving a coolant circuit.

7. Electric motor (3) according to one of the claims 1 through 5, **characterised by** the cooling device (1) being formed by a Peltier element.

8. Electric motor (3) according to one of the preceding claims, **characterised by** the number of turns on the additional winding (11) being less than the number of turns on the first winding (10).

9. Electric motor (3) according to one of the preceding claims, **characterised by** a voltage regulator connected between the additional winding (11) and the cooling device (1) to control the auxiliary voltage (Uₐᵤₓ) applied to the cooling device (1).

10. Electric motor (3) according to claim 9, **characterised by** the voltage regulator being configured to shut off the cooling device when needed.

11. Electric motor (3) according to one of the preceding claims, **characterised by** the core being toroidal.

12. Electric motor (3) according to one of the preceding claims, **characterised by** the first winding (10) and the additional winding (11) being wound over each other.

13. Electric motor (3) according to one of the preceding claims, **characterised by** the first winding (10) being part of a step-up converter that can charge the capacitor (4) of the intermediate circuit (2) to a voltage value that is higher than the peak value of the input voltage of the converter system (2).

14. Electric motor (3) according to one of the claims 1 through 11, **characterised by** the first winding (10) being part of a step-down converter that can charge the capacitor (4) of the intermediate circuit (2) to a voltage value that is lower than the peak value of the input voltage of the converter system (2).

15. Electric motor (3) according to one of the claims 1 through 11, **characterised by** the first winding (10) being part of a DC converter that can charge the capacitor (4) of the intermediate circuit (2) to a voltage value that is higher or lower than the peak value of the input voltage of the converter system (2).

16. Electric motor (3) according to one of the preceding claims, **characterised by** the control (8) being multi-phase.

17. Electric motor (3) according to one of the preceding claims, **characterised by** the control (8) being a power factor control.

18. Pump assembly with a pump unit and an electric motor (3) according to one of the preceding claims.

## Revendications

1. Moteur électrique (3) d'entraînement d'un groupe de pompe, avec, en particulier, un système convertisseur d'électronique de puissance (2) pour l'alimentation en tension du moteur électrique (3) et avec un dispositif de refroidissement actif (1) pour le refroidissement du moteur électrique (3) et/ou du système convertisseur (2), sachant que le système convertisseur (2) présente un circuit intermédiaire (5) formé d'au moins un condenseur (4), une régulation (8) ainsi qu'au moins un premier bobinage (10), au travers duquel la puissance est transmissible dans le circuit intermédiaire (5) et qui est relié à la régulation (8), sachant qu'est placé sur le noyau (9) un second bobinage (11) à l'intérieur duquel est générée une tension auxiliaire induite (Uaux), **caractérisé en ce que** le second bobinage (11) est relié au dispositif de refroidissement actif (1) pour l'alimentation du dispositif de refroidissement (1) en tension auxiliaire (Uaux).

2. Moteur électrique (3) selon la revendication 1, **caractérisé en ce que** le premier bobinage (10) est une bobine d'induction (10) dans laquelle le courant (i_{zk}) dans le circuit intermédiaire (5) peut circuler.

3. Moteur électrique (3) selon la revendication 1, **caractérisé en ce que** le premier bobinage (10) est le côté primaire d'un transformateur (12) et qu'un second bobinage (13) formant son côté secondaire est relié au circuit intermédiaire (5).

4. Moteur électrique (3) selon l'une des revendications précédentes, **caractérisé en ce que** la régulation (8) présente un interrupteur commandable, plus particulièrement un interrupteur électronique (8a), commandé par un régulateur (8b), sachant qu'une connexion du premier bobinage (10) peut, au travers de l'interrupteur (8a) être raccordée à un potentiel de référence (GND), plus particulièrement une masse.

5. Moteur électrique (3) selon l'une des revendications précédentes, **caractérisé en ce que** le dispositif de refroidissement (1) est formé d'un ventilateur à moteur électrique pour la génération d'un flux d'air refroidissant.

6. Moteur électrique (3) selon l'une des revendications précédentes, **caractérisé en ce que** le dispositif de refroidissement (1) est formé d'une pompe de fluide réfrigérant à moteur électrique destinée à l'entraînement d'un circuit de fluide réfrigérant.

7. Moteur électrique (3) selon l'une des revendications 1 à 5, **caractérisé en ce que** le dispositif de refroidissement est formé d'un élément Peltier.

8. Moteur électrique (3) selon l'une des revendications précédentes, **caractérisé en ce que** le nombre d'enroulements du second bobinage (11) est inférieur au nombre d'enroulements du premier bobinage (10).

9. Moteur électrique (3) selon l'une des revendications précédentes, **caractérisé en ce qu'**entre le second bobinage (11) est le dispositif de refroidissement (1) est monté un régulateur de tension pour la régulation de la valeur de la tension auxiliaire (Uₐᵤₓ) appliquée au dispositif de refroidissement (1).

10. Moteur électrique (3) selon la revendication 9, **caractérisé en ce que** le régulateur de tension est configuré pour arrêter au besoin le dispositif de refroidissement.

11. Moteur électrique (3) selon une des revendications précédentes, **caractérisé en ce que** le noyau est en forme de tore.

12. Moteur électrique (3) selon l'une des revendications précédentes, **caractérisé en ce que** le premier bobinage (10) et le second bobinage (11) sont enroulés par superposition.

13. Moteur électrique (3) selon l'une des revendications précédentes, **caractérisé en ce que** le premier bobinage (10) fait partie d'un convertisseur élévateur pouvant charger le condenseur (4) du circuit intermédiaire (2) à une valeur de tension supérieure à la valeur de crête de la tension d'entrée du système convertisseur (2).

14. Moteur électrique (3) selon l'une des revendications 1 à 11, **caractérisé en ce que** le premier bobinage (10) fait partie d'un convertisseur élévateur pouvant charger le condenseur (4) du circuit intermédiaire (2) à une valeur de tension inférieure à la valeur de crête de la tension d'entrée du système convertisseur (2).

15. Moteur électrique (3) selon l'une des revendications 1 à 11, **caractérisé en ce que** le premier bobinage (10) fait partie d'un convertisseur de courant continu pouvant charger le condenseur (4) du circuit intermédiaire (2) à une valeur de tension supérieure ou inférieure à la valeur de crête de la tension d'entrée du système convertisseur (2).

16. Moteur électrique (3) selon une des revendications précédentes, **caractérisé en ce que** La régulation (8) est multiphasé.

17. Moteur électrique (3) l'une des revendications précédentes, **caractérisée en ce que** la régulation (8) est une régulation à facteur de puissance.

18. Unité de pompage avec un groupe de pompe et moteur électrique (3) selon l'une des revendications précédentes.
